# EUROPEAN PATENT APPLICATION

(11) **EP 4 628 274 A1**
(43) Date of publication of application: **08.10.2025**
(21) Application number: 23916044.3
(22) Date of filing: 13.01.2023
(51) Int. Cl.: B29C 31/04, B29B 7/20, B29B 7/24, B29C 48/285

(54) **RUBBER EXTRUDER, RUBBER EXTRUSION SYSTEM, AND RUBBER MATERIAL LOADING METHOD**

(71) Applicant: Nakata Engineering Co., Ltd., Kobe-shi, Hyogo 651-2312 (JP)
(72) Inventor: SATO, Tadasuke, Kobe-shi, Hyogo 651-2312 (JP)
(74) Representative: Manitz Finsterwald Patent- und Rechtsanwaltspartnerschaft mbB
(86) International application number: PCT/JP2023/000840
(87) International publication number: WO 2024/150424

(57) **Abstract**

To provide a rubber extruder, a rubber extrusion system and a rubber material feeding method, in which a strip-shaped rubber material can be safely fed with a simple structure. It is a rubber extruder 2 into which a strip-shaped rubber material G is fed. It comprises a circular cylindrical cylinder 5, a screw 6 disposed inside the cylinder 5, and a feeding section 7 located on an upstream side of the cylinder 5 in the extrusion direction D. The feeding section 7 comprises a feeding port 7b penetrating, in a radial direction of the cylinder 5, from the outermost outer surface 7a to an inner surface 5b of the cylinder 5. At the position of the feeding section 7 in the extrusion direction D, the screw 6 has a biting section 6a into which the fore-end portion Ga of the rubber material G to be fed is bitten. The distance L1 from the outer surface 7a of the feeding section 7 to the biting section 6a is smaller than the opening width W of the feeding port 7b in the extrusion direction D at the outer surface 7a.

## Description

### Technical field

The present invention relates to a rubber extruder, a rubber extrusion system and a rubber material feeding method, in which a strip-shaped rubber material is fed.

### Background technology

Conventionally, there have been known various methods for feeding a strip-shaped rubber material into a rubber extruder.

For example, Patent Document 1 below suggests a conveying device being capable of reducing the workload by continuously supplying a strip-shaped rubber material to a rubber extruder using connected rollers or a conveyor.

### Prior art document

### Patent document

Patent document 1: Japanese Patent Application Publication No. 2019-048693

### Summary of the Invention

### Problems to be solved by the Invention

The conveying device of Patent Document 1, however, requires assistance from the operator to cause a fore-end portion of the first rubber material to be bitten into a rubber extruder, and this work is a dangerous work to be performed from above a rubber feeding port.

Further, the conveying device of Patent Document 1 suggests supplying the rubber material using a folding device having a complicated structure, and
sometimes the fore-end portion of the folded rubber material spreads and comes into contact with the rubber feeding port, so further improvements have been desired in the method of feeding the fore-end portion of the rubber material.

In view of the above-mentioned circumstances, the present invention was devised, and its primary objective is to provide a rubber extruder, a rubber extrusion system and a rubber material feeding method, in which a strip-shaped rubber material can be safely fed with a simple structure.

### Means of solving the Problems

The present invention is a rubber extruder into which a strip-shaped rubber material is fed, and which comprises a circular cylindrical cylinder, a screw disposed inside the cylinder, and a feeding section located on an upstream side of the cylinder in the extrusion direction,
the feeding section is provided with a feeding port penetrating from an outer surface which is the outermost side in the radial direction of the cylinder to an inner surface of the cylinder,
the screw is provided, at the position of the feeding section in the extrusion direction, with a biting section into which a fore-end portion of the rubber material to be fed is bitten, and
a distance from the outer surface in the feeding section to the biting section is smaller than an opening width of the feeding port in the extrusion direction at the outer surface.

### Effect of the Invention

Since the rubber extruder of the present invention has the above-described structure, a strip-shaped rubber material can be safely fed with the simple structure.

### Brief description of the Drawing

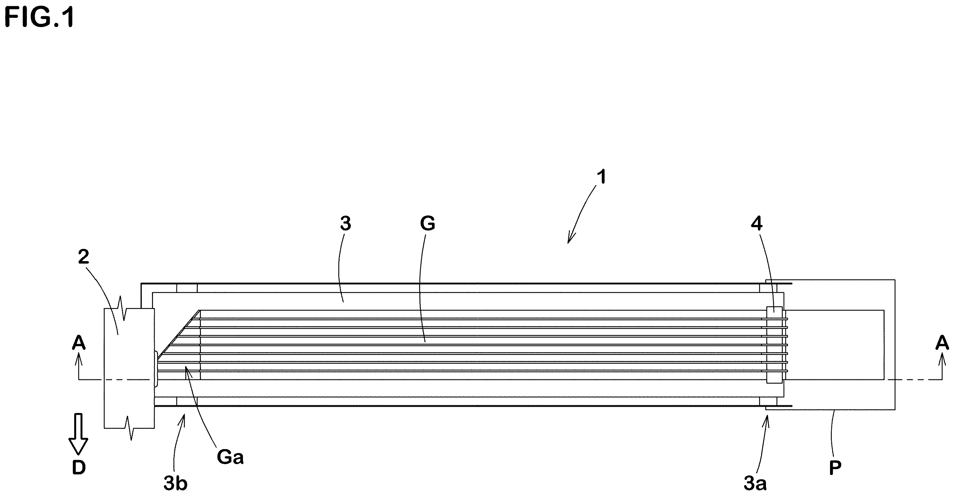

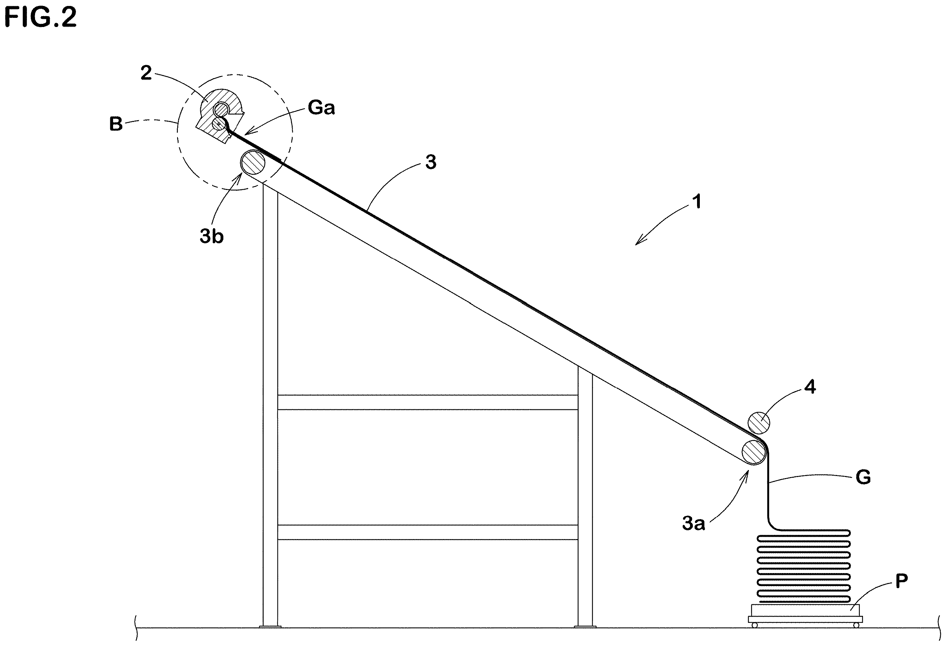

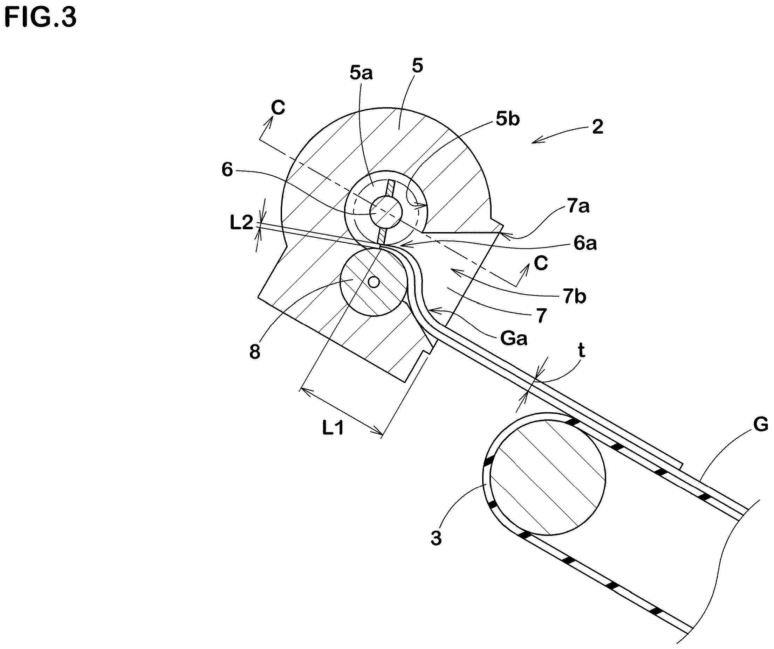

[Fig. 1]
   a plan view showing an embodiment of the rubber extrusion system of the present invention.
[Fig. 2]
   a cross-sectional view taken along line A-A in Fig. 1.
[Fig. 3]
   an enlarged view of part B of Fig. 2.
[Fig. 4]
   a cross-sectional view taken along line C-C in Fig. 3.
[Fig. 5]
   a plan view of the fore-end portion of the rubber material.
[Fig. 6]
   a perspective view of a roller.
[Fig. 7]
   a flowchart showing a rubber material feeding method of the present embodiment.
[Fig. 8]
   a cross-sectional view of a rubber extruder as a second embodiment.
[Fig. 9]
   a cross-sectional view of a rubber extruder as a third embodiment.

### Modes for carrying out the Invention

Hereinafter, an embodiment of the present invention will be described in detail based on the drawings.

Fig. 1 is a plan view showing a rubber extrusion system 1 of the present embodiment, and Fig. 2 is a cross-sectional view taken along line A-A in Fig. 1.

As shown in Figs. 1 and 2, the rubber extrusion system 1 of the present embodiment comprises a rubber extruder 2 into which a strip-shaped rubber material G is fed, a conveyor 3 which conveys the rubber material G to the rubber extruder 2, and a roller 4 arranged on the conveyor 3.

The rubber material G in the present embodiment is of unvulcanized rubber.

A strip of the rubber material G is, for example, folded alternately in the longitudinal direction, and put on a pallet P placed in the vicinity of the rubber extrusion system 1. Such rubber material G is suitable for being continuously fed to the rubber extruder 2.

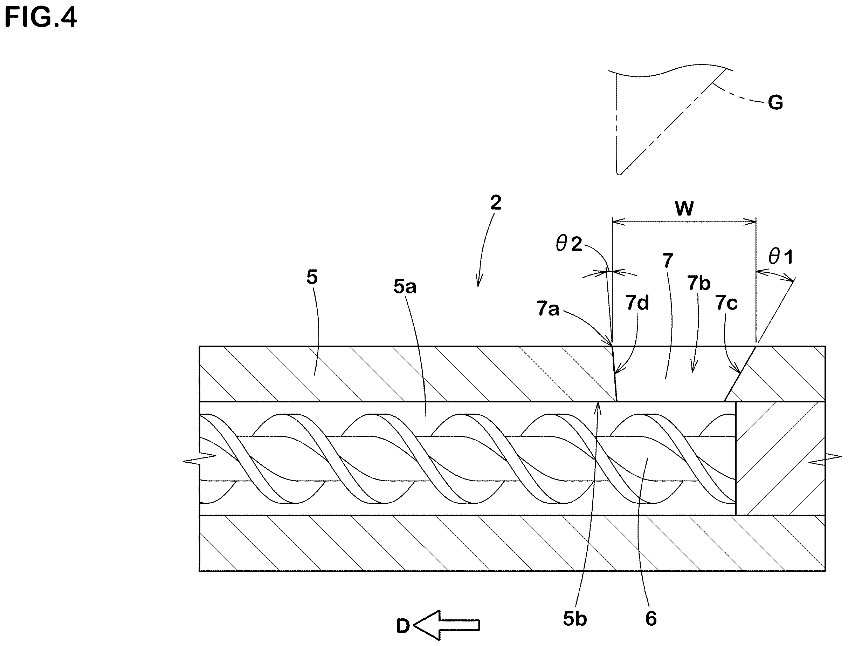

Fig. 3 is an enlarged view of a portion B of Fig. 2, and Fig. 4 is a cross sectional view taken along line C-C in Fig. 3.

As shown in Figs. 3 and 4, the rubber extruder 2 of the present embodiment comprises a circular cylindrical cylinder 5, a screw 6 disposed inside the cylinder 5, and a feeding section 7 located on an upstream side of the cylinder 5 in the extrusion direction D.

The circular cylindrical cylinder 5 is not limited in its external shape as long as it has a space 5a being capable of accommodating the screw 6 inside.

The external shape may be not circular cylindrical as a whole, for example, by partially including a flat part or a protruding part.

The screw 6 in the present embodiment has, at the position of the feeding section 7 in the extrusion direction D, a biting section 6a into which the fore-end portion Ga of the rubber material G to be fed is bitten.

Such screw 6 can feed the strip-shaped rubber material G into the inside of the cylinder 5 one after another by biting the fore-end portion Ga of the rubber material G into the biting section 6a,

The feeding section 7 in the present embodiment has a feeding port 7b which penetrates from the outer surface 7a which is outermost in the radial direction of the cylinder 5 to the inner surface 5b of the cylinder 5.

Such feeding section 7 can feed the rubber material G into the cylinder 5 with a simple structure.

The distance L1 from the outer surface 7a in the feeding section 7 to the biting section 6a in the present embodiment is smaller than the opening width W of the feeding port 7b in the extrusion direction D at the outer surface 7a.

In such feeding section 7, it is easy to let the fore-end portion Ga of the rubber material G to be bitten into the biting section 6a without the assistance of the operator, and the rubber material G can be bitten without the assistance of the operator. For this reason, the rubber extruder 2 of the present embodiment can safely feed the strip-shaped rubber material G with the simple structure.

The rubber extruder 2 as a more preferable mode is not provided with a separate hopper which extends the feeding section 7. The rubber extruder 2 is not limited to such a mode, and may have a separately provided hopper, for example. In this case, as the feeding section 7 includes such a separately provided hopper, it is fine that a distance from an outer surface of the hopper to the biting section 6a is made smaller than an opening width of the hopper in the extrusion direction D at the outer surface.

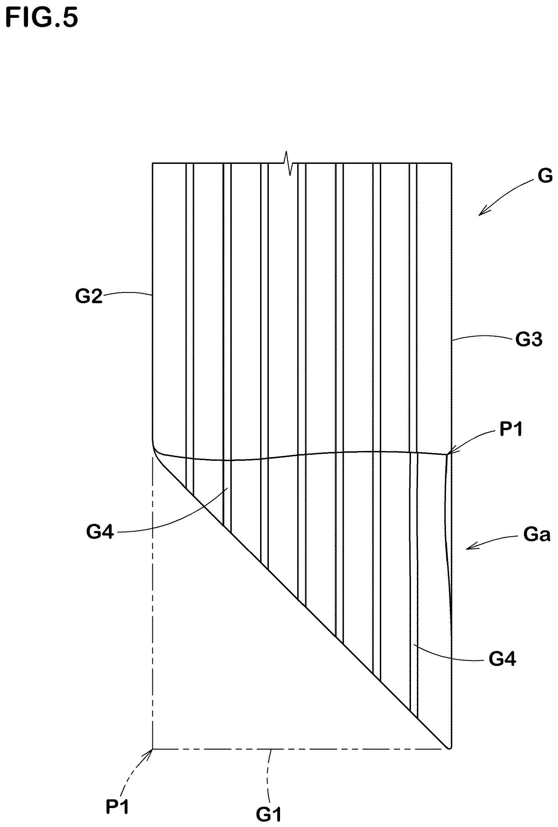

Fig. 5 is a plan view of the fore-end portion Ga of the rubber material G

As shown in Fig. 5, the fore-end portion Ga of the rubber material G in the present embodiment comprises a first edge G1 in the longitudinal direction, and a second edge G2 and a third edge G3 in the width direction.

It is desirable that the fore-end portion Ga of the rubber material G is fed by being folded such that the intersecting point P1 between the first edge G1 and the second edge G2 is placed on the third edge G3.

Such rubber material G can be increased in rigidity of the fore-end portion Ga, and it becomes possible to strongly push it into the biting section 6a (shown in Fig. 3).

Further, in such rubber material G, as the length in the longitudinal direction and the length in the width direction of the folded fore-end portion Ga substantially match with each other, it can be reliably bitten into the biting section 6a when fed to the feeding section 7 where the distance L1 is smaller than the opening width W (as shown in Figs. 3 and 4).

In the rubber extrusion system 1, as shown in Figs. 1 and 2, it is desirable that the rubber material G, which is placed near the rubber extrusion system 1 by the use of the pallet P or the like, is conveyed to the feeding section 7 of the rubber extruder 2 by the use of the conveyor 3.

For example, the conveyor 3 is a belt conveyor. Such conveyor 3 can stably convey the rubber material G to the feeding section 7.

The conveyor 3 in the present embodiment is arranged such that the height gradually increases from its upstream side 3a where the fore-end portion Ga of the rubber material G is placed, to its downstream side 3b where it is supplied to the rubber extruder 2.

In such conveyor 3, the work of transferring the fore-end portion Ga of the rubber material G from the pallet P etc. is performed at a lower position, so it is possible to increase the safety of the work.

The rubber extrusion system 1 may include, for example, a detection means for detecting a worker entered an area surrounding the feeding section 7 although such is not shown. Examples of the detection means include an area sensor, a fence with a sensor, and the like. Such rubber extrusion system 1 can further increase the safety of the work.

When the rubber extruder 2 is to be operated with an operator existing in the vicinity of the feeding section 7, it is desirable that the rubber extruder 2 can operate only while the operator is pressing the operation button.

Such rubber extruder 2 can further increase the safety of the work.

The roller 4 in the present embodiment is disposed on the upstream side 3a of the conveyor 3.

It is desirable that the roller 4 allows the folded state of the fore-end portion Ga of the rubber material G to be maintained by sandwiching it between the roller 4 and the conveyor 3.

Thereby, it is possible to make the rubber material G to be strongly bitten into the biting section 6a from the conveyor 3 while maintaining the shape of the folded fore-end portion Ga.

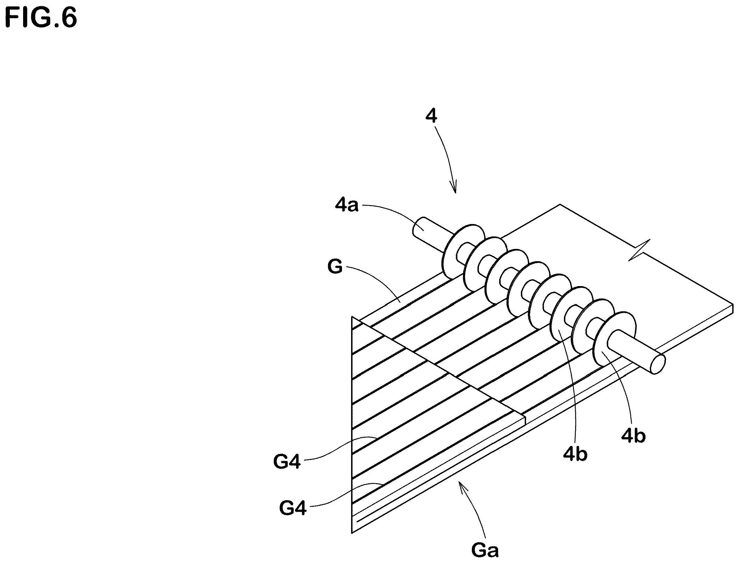

Fig. 6 is a perspective view of the roller 4.

As shown in Fig. 6, the roller 4 comprises, for example, a main body 4a constituting a rotating shaft, and a plurality of annular protrusions 4b protruding from the main body 4a radially of the main body 4a.

Such roller 4 can form a plurality of streaks G4 along the longitudinal direction of the strip-shaped rubber material G so that the folded state of the fore-end portion Ga of the rubber material G can be firmly maintained.

Note that the roller 4 is not limited to such mode, and may have a circular cylindrical shape without protrusions, for example, or may have a non-annular protrusion which is not continuous in the circumferential direction.

As shown in Fig. 3, the rubber extruder 2 of the present embodiment comprises a feed roller 8 disposed inside the feeding section 7 in parallel with the screw 6.

The feed roller 8 has, for example, a circular cylindrical shape.

Such feed roller 8 can feed the rubber material G input from the feeding port 7b into the biting section 6a.

The biting section 6a in the present embodiment is a position where a distance L2 between an outer diameter surface of the screw 6 and an outer diameter surface of the feed roller 8 is smaller than a thickness t of the fore-end portion Ga of the rubber material G to be fed. Such biting section 6a can make the screw 6 reliably bite the fore-end portion Ga of the rubber material G fed by the feed roller 8.

As shown in Fig. 4, the feeding port 7b in the present embodiment has a first inner surface 7c on the upstream side and a second inner surface 7d on the downstream side in the extrusion direction D.

It is desirable that a first angle θ1 which is an angle of the first inner surface 7c with respect to a thickness direction of the cylinder 5, is larger than a second angle θ2 which is an angle of the second inner surface 7d with respect to the thickness direction of the cylinder 5.

Such feeding port 7b prevents the fore-end portion Ga of the folded rubber material G from coming into contact with an edge portion between the feeding port 7b and the outer surface 7a and being damaged, and allows the rubber material G to be fed smoothly.

The first angle θ1 of the first inner surface 7c is preferably 15 to 50 degrees.

By setting the first angle θ1 to 15 degrees or more, it is possible to prevent an oblique surface of the fore-end portion Ga of the folded rubber material G from coming into contact with the edge portion of the feeding port 7b and the outer surface 7a, and being damaged.

By setting the first angle θ1 to 50 degrees or less, it is possible to suppress the rubber material G from running onto the first inner surface 7c so as to reduce the resistance when the rubber material G is fed, and make it easier for the rubber material G to be bitten again even when it backflows from the screw 6.

The second angle θ2 of the second inner surface 7d is preferably 0 to 10 degrees.

By setting the second angle θ2 to 0 degrees or more, the edge portion between the feeding port 7b and the outer surface 7a does not form an acute angle, and damage to the rubber material G due to contact can be suppressed.

By setting the second angle θ2 to 10 degrees or less, it is possible to suppress the fore-end portion Ga of the rubber material G from running onto the second inner surface 7d, and to reduce the resistance when the rubber material G is fed.

The feeding section 7 may include, for example, a detection section (not shown) for detecting that the fore-end portion Ga of the rubber material G has reached the biting section 6a.

As the detection section, for example, a photoelectric sensor and the like may be included.

Such feeding section 7 can detect a defective biting of the fore-end portion Ga of the rubber material G at an early stage.

Next, a method for feeding the rubber material G into the rubber extruder 2 by the use of the above-described rubber extrusion system 1 will be described with reference to Figs. 1 to 6.

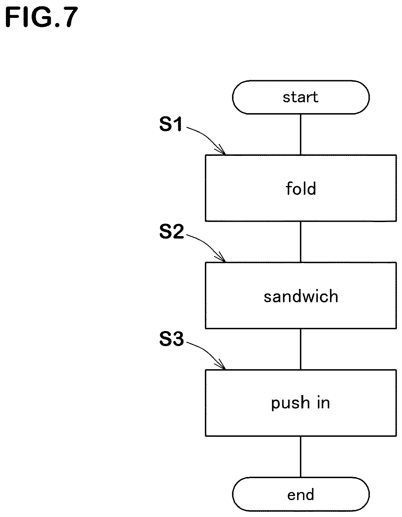

Fig. 7 is a flowchart showing the rubber material feeding method of the present embodiment.

As shown in Fig. 7, in the rubber material feeding method of the present embodiment, a first step S1 is performed in which the fore-end portion Ga of the rubber material G is folded so that the intersecting point P1 of the first edge G1 and the second edge G2 is placed on the third edge G3.

The first step S1 may be performed, for example, by an operator or automatically by a robot arm (not shown) or the like.

Next, in the rubber material feeding method, it is desirable that a second step S2 is performed in which the rubber material G is sandwiched between the conveyor 3 and the roller 4 in order to allow the shape of the folded fore-end portion Ga to be maintained. The second step S2 in the present embodiment is performed on the upstream side 3a of the conveyor 3.

In the rubber material feeding method of the present embodiment, next, a third step S3 is performed in which the folded fore-end portion Ga is pushed into the biting section 6a from the feeding section 7.

In the third step S3, for example, it is pushed by the driving force of the conveyor 3.

In the third step S3, it is preferably pushed with the force of 1N or more.

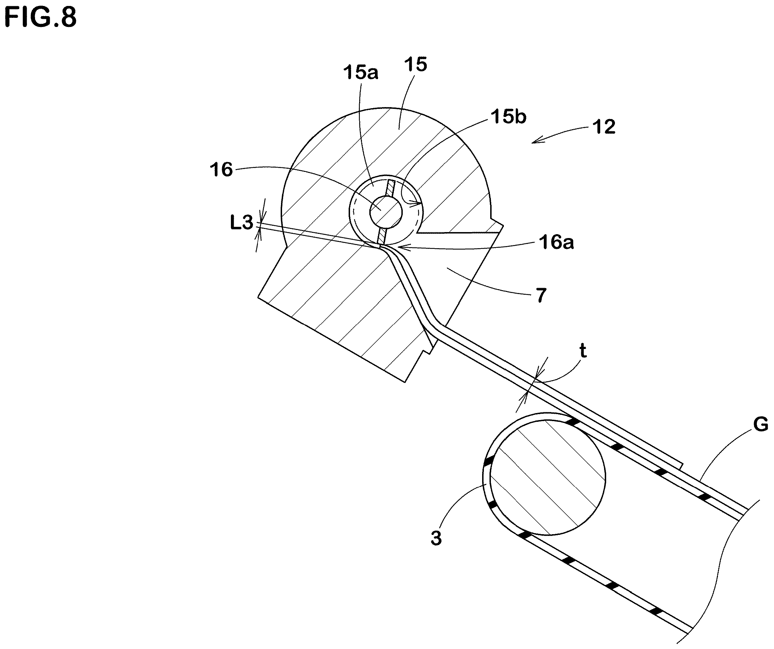

Fig. 8 is a cross-sectional view of a rubber extruder 12 as a second embodiment, corresponding to Fig. 3.

Elements same as those in the above-described embodiment are given the same reference numerals, and their descriptions will be omitted.

As shown in Fig. 8, the rubber extruder 12 of the second embodiment comprises a circular cylindrical cylinder 15, a screw 16 disposed inside the cylinder 15, and a feeding section 7 located on the upstream side of the cylinder 15 in the extrusion direction D.

On the other hand, the rubber extruder 12 of the second embodiment does not have the feed roller 8.

Similarly to the above-described cylinder 5, the cylinder 15 has, for example, a space 15a being capable of accommodating the screw 16 therein, and an inner surface 5b which defines the space 15a.

It is desirable that, similarly to the above-described screw 6, the screw 16 has, at the position of the feeding section 7 in the extrusion direction D, a biting section 16a into which the fore-end portion Ga of the rubber material G fed from the conveyor 3 is bitten.

The biting section 16a in the second embodiment is a position inside the feeding section 7 where a distance L3 between an outer diameter surface of the screw 16 and an inner surface 15b of the cylinder 15 is smaller than the thickness t of the fore-end portion Ga of the rubber material G to be fed.

Such biting section 16a can make the screw 16 reliably bite the fore-end portion Ga of the rubber material G fed from the feeding section 7.

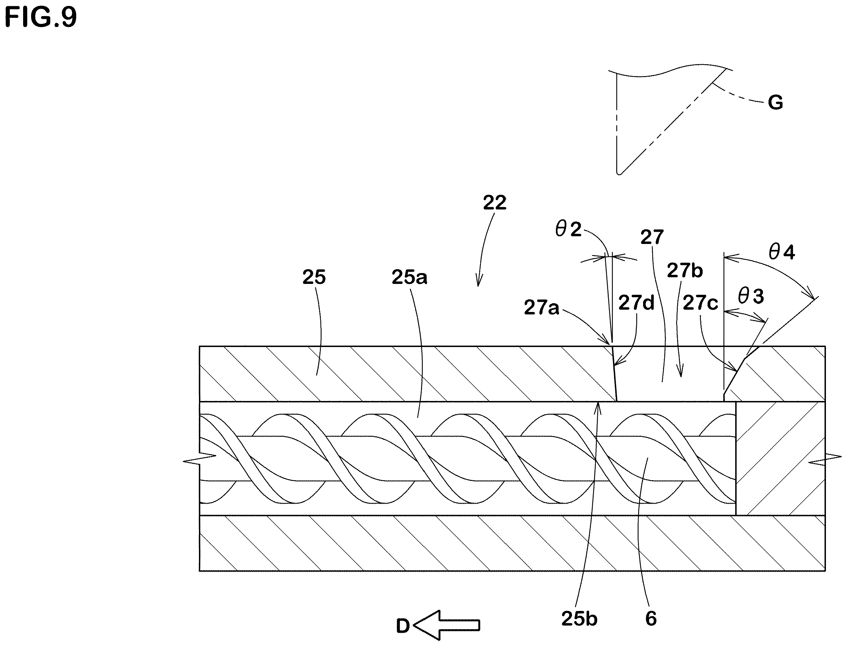

Fig. 9 is a cross-sectional view of a rubber extruder 22 as a third embodiment, corresponding to Fig. 4.

As shown in Fig. 9, the rubber extruder 22 of the third embodiment comprises a circular cylindrical cylinder 25, a screw 6 disposed inside the cylinder 25, and a feeding section 27 located on an upstream side of the cylinder 25 in the extrusion direction D.

Similarly to the above-described cylinder 5, the cylinder 25 has, for example, a space 25a being capable of accommodating the screw 6 therein, and an inner surface 25b which defines the space 25a.

The feeding section 27 in the second embodiment comprises a feeding port 27b which penetrates from the outermost surface 27a to the inner surface 25b in the radial direction of the cylinder 25 similarly to the above-described feeding section 7.

Such feeding section 27 can supply the rubber material G into the cylinder 25 with the simple structure.

The feeding port 27b in the second embodiment has a first inner surface 27c on the upstream side in the extrusion direction D and a second inner surface 27d on the downstream side, similarly to the above-described feeding port 7b.

The first inner surface 27c in the second embodiment has a third angle θ3 that is an angle on the side of the inner surface 25b of the cylinder 25 with respect to the thickness direction of the cylinder 25, and a fourth angle θ4 that is an angle on the side of the outer surface 27a of the feeding section 27 with respect to the thickness direction of the cylinder 25.

It is desirable that the third angle θ3 is larger than the second angle θ2 which is the angle of the second inner surface 27d with respect to the thickness direction of the cylinder 25.

It is desirable that the fourth angle θ4 is larger than the third angle θ3.

Such feeding port 27b promotes deformation of the rubber material G in the width direction, and allows the rubber material G to be fed smoothly.

It is desirable that the third angle θ3 and the fourth angle θ4 are each arbitrarily set within the range of 15 to 50 degrees, similarly to the first angle θ1.

By setting the third angle θ3 to 15 degrees or more, it is possible to prevent the rubber material G from coming into contact with the edge portion and being damaged.

By setting the fourth angle θ4 to 50 degrees or less, it is possible to suppress the rubber material G from running onto the first inner surface 27c, and to reduce the resistance when the rubber material G is fed.

For example, the first inner surface 27c may be provided, on the side of the inner surface 25b of the cylinder 25 with respect to the portion having the third angle θ3, with a straight portion extending in the radial direction of the cylinder 25.

For example, the second inner surface 27d may also be provided, on the side of the inner surface 25b of the cylinder 25, with a straight portion although not shown.

Such straight portion helps in stabilizing the movement of the rubber material G being fed.

The first inner surface 27c and the second inner surface 27d are not limited to such a mode. For example, they may be arc-shaped such that angles with respect to the thickness direction of the cylinder 25 gradually increase from the side of the inner surface 25b of the cylinder 25 toward the feeding port 27b and the outer surface 27a.

While detailed description has been made of especially preferable embodiments of the present invention, the present invention can be embodied in various modes without being limited to the above-described embodiments.

### [Additional statement]

The present invention is as follows.

### [Present Invention 1]

A rubber extruder into which a strip-shaped rubber material is fed,
the rubber extruder comprising a circular cylindrical cylinder, a screw disposed inside the cylinder, and a feeding section located on the upstream side of the cylinder in the extrusion direction,
the feeding section comprising a feeding port penetrating, in the radial direction of the cylinder, from the outermost outer surface to the inner surface of the cylinder,
the screw having, at the position of the feeding section in the extrusion direction, a biting section into which a fore-end portion of the rubber material to be fed is bitten, and
a distance from the outer surface of the feeding section to the biting section is smaller than an opening width of the feeding port in the extrusion direction at the outer surface.

### [Present Invention 2]

The rubber extruder as set forth in Present Invention 1, which comprises a feed roller arranged inside the feeding section in parallel with the screw, and
the biting section is a position where a distance between an outer diameter surface of the screw and an outer diameter surface of the feed roller is smaller than a thickness of the fore-end portion of the rubber material to be fed.

### [Present Invention 3]

The rubber extruder as set forth in Present Invention 1, wherein the biting section is a position inside the feeding section where a distance between an outer diameter surface of the screw and an inner surface of the cylinder is smaller than a thickness of the fore-end portion of the rubber material to be fed.

### [Present Invention 4]

The rubber extruder as set forth in any one of Present Inventions 1 to 3, wherein
the feeding port has a first inner surface on the upstream side in the extrusion direction and a second inner surface on the downstream side, and
a first angle which is an angle of the first inner surface with respect to a thickness direction of the cylinder is larger than a second angle which is an angle of the second inner surface with respect to the thickness direction of the cylinder.

### [Present Invention 5]

The rubber extruder as set forth in Present Invention 4, wherein the first angle is 15 to 50 degrees.

### [Present Invention 6]

The rubber extruder as set forth in Present Invention 4 or 5, wherein the second angle is 0 to 10 degrees.

### [Present Invention 7]

The rubber extruder as set forth in any one of Present Inventions 1 to 6, wherein the fore-end portion of the rubber material comprises a first edge in the longitudinal direction, and a second edge and a third edge in the width direction, and is fed by being folded so that an intersecting point of the first edge and the second edge is placed on the third edge.

### [Present Invention 8]

A rubber extrusion system comprising the rubber extruder as set forth in Present Invention 7, the rubber extrusion system comprising
a conveyor for conveying the rubber material to the feeding section, and
a roller disposed on the conveyor for maintaining a folded state of the fore-end portion of the rubber material.

### [Present Invention 9]

The rubber extrusion system as set forth in Present Invention 8, which comprises
a detection means for detecting an intrusion of an operator into a surrounding area of the feeding section.

### [Present Invention 10]

A method for feeding the rubber material into the rubber extruder by the use of the rubber extrusion system as set forth in Present Invention 8 or 9,
the method for feeding the rubber material comprising
a first step of folding the fore-end portion of the rubber material so that the intersecting point of the first edge and the second edge is placed on the third edge,
a second step of sandwiching the rubber material between the conveyor and the roller in order to allow a shape of the folded fore-end portion to be maintained, and
a third step of pushing the folded fore-end portion into the biting section from the feeding section.

### Description of Symbols

2 rubber extruder
5 cylinder
5b inner surface
6 screw
6a biting section
7 feeding section
7a outer surface
7b feeding port

## Claims

1. A rubber extruder into which a strip-shaped rubber material is fed,
the rubber extruder comprising a circular cylindrical cylinder, a screw disposed inside the cylinder, and a feeding section located on an upstream side of the cylinder in an extrusion direction,
the feeding section comprising a feeding port penetrating, in a radial direction of the cylinder, from an outermost outer surface to an inner surface of the cylinder,
the screw having, at the position of the feeding section in the extrusion direction, a biting section into which a fore-end portion of the rubber material to be fed is bitten, and
a distance from the outer surface of the feeding section to the biting section is smaller than an opening width of the feeding port in the extrusion direction at the outer surface.

2. The rubber extruder as set forth in claim 1, which comprises a feed roller arranged inside the feeding section in parallel with the screw, and
the biting section is a position where a distance between an outer diameter surface of the screw and an outer diameter surface of the feed roller is smaller than a thickness of the fore-end portion of the rubber material to be fed.

3. The rubber extruder as set forth in claim 1, wherein the biting section is a position inside the feeding section where a distance between an outer diameter surface of the screw and an inner surface of the cylinder is smaller than a thickness of the fore-end portion of the rubber material to be fed.

4. The rubber extruder as set forth in any one of claims 1 to 3, wherein
the feeding port has a first inner surface on the upstream side in the extrusion direction and a second inner surface on the downstream side, and
a first angle which is an angle of the first inner surface with respect to a thickness direction of the cylinder is larger than a second angle which is an angle of the second inner surface with respect to the thickness direction of the cylinder.

5. The rubber extruder as set forth in claim 4, wherein the first angle is 15 to 50 degrees.

6. The rubber extruder as set forth in claim 4 or 5, wherein the second angle is 0 to 10 degrees.

7. The rubber extruder as set forth in any one of claims 1 to 6, wherein
the fore-end portion of the rubber material comprises a first edge in a longitudinal direction, and a second edge and a third edge in a width direction, and is fed by being folded so that an intersecting point of the first edge and the second edge is placed on the third edge.

8. A rubber extrusion system comprising the rubber extruder as set forth in claim 7, the rubber extrusion system comprising
a conveyor for conveying the rubber material to the feeding section, and
a roller disposed on the conveyor for maintaining a folded state of the fore-end portion of the rubber material.

9. The rubber extrusion system as set forth in claim 8, which comprises
a detection means for detecting an intrusion of an operator into a surrounding area of the feeding section.

10. A method for feeding the rubber material into the rubber extruder by the use of the rubber extrusion system as set forth in claim 8 or 9,
the method for feeding the rubber material comprising
a first step of folding the fore-end portion of the rubber material so that the intersecting point of the first edge and the second edge is placed on the third edge,
a second step of sandwiching the rubber material between the conveyor and the roller in order to allow a shape of the folded fore-end portion to be maintained, and
a third step of pushing the folded fore-end portion into the biting section from the feeding section.
